# FASCICULE DE BREVET EUROPEEN

(11) **EP 3 146 545 B1**
(45) Date de publication et mention de la délivrance du brevet: **18.03.2020**
(21) Numéro de dépôt: 15796685.4
(22) Date de dépôt: 20.05.2015
(51) Int. Cl.: H01G 9/042, H01M 14/00, H01G 9/20, H01M 4/38, H01M 4/485, H01M 4/525, H01M 4/58, H01M 4/587, H01M 10/0525, H01M 10/46, H01M 4/02

(54) **ÉLECTRODE POUR PHOTOBATTERIE**
ELEKTRODE FÜR EINE FOTOVOLTAIKBATTERIE
ELECTRODE FOR A PHOTOVOLTAIC BATTERY

(30) Priorité: 20.05.2014 US 201462000809 P
(43) Date de publication de la demande: 29.03.2017
(73) Titulaire: Hydro-Québec, Montréal QC H2Z 1A4 (CA)
(72) Inventeur: PAOLELLA, Andrea, Montréal, Québec H2X 2L6 (CA); FAURE, Cyril, Longueuil, Québec J4N 0B2 (CA); GUERFI, Abdelbast, Brossard, Québec J4X 1W2 (CA); HOVINGTON, Pierre, Boucherville, Québec J4B 2L4 (CA); ZAGHIB, Karim, Longueuil, Québec J4N 1T8 (CA)
(74) Mandataire: Lang, Johannes
(86) Numéro de dépôt international: PCT/CA2015/050457
(87) Numéro de publication internationale: WO 2015/176185

(56) Documents cités:
- EP-A1- 3 075 024
- CN-Y- 201 038 243
- KR-B1- 101 338 957
- US-A1- 2007 092 793
- US-A1- 2010 307 577
- US-A1- 2011 100 532
- US-A1- 2012 085 411
- US-A1- 2013 147 420
- US-A1- 2014 087 257

## Description

### DOMAINE TECHNIQUE

L'invention se rapporte généralement aux électrodes. Plus spécifiquement, l'invention se rapporte à une électrode comprenant une combinaison d'un matériau d'électrode du même type que les matériaux utilisés dans les batteries Li-ion et d'un colorant sensible à la lumière du même type que les colorants utilisés dans les cellules solaires à colorant photosensible (DSSC, « dye sensitized solar cell »). Une batterie comportant une électrode selon l'invention peut être chargée par la lumière.

### ÉTAT DE LA TECHNIQUE

Une batterie lithium-ion peut être sommairement décrite comme suit : la batterie se compose d'un matériau de cathode (comme par exemple LiFePO₄, LiCoO₂, FeS₂, V₂O₅, etc.), d'un sel de lithium (comme par exemple LiPF₆, LiTFSI, LiCIO₄, LMO, Li₂CO₃, etc.) dissout dans un solvant liquide ou un polymère, et d'un matériau d'anode (comme par exemple le graphite, LTO, etc.). Dans le cas où les matériaux d'anode ou de cathode ne sont pas de bons conducteurs électroniques, ils peuvent être revêtus par du carbone et/ou être déposés sur des substrats métalliques (comme par exemple l'aluminium, le cuivre, etc.).

The Schéma 1 se rapporte au fonctionnement d'une batterie Li-ion - la référence numérique 10 indique le collecteur de courant de la cathode en cuivre, la référence numérique 11 indique l'électrolyte conducteur des ions lithium et la référence numérique 12 indique le collecteur de courant de l'anode en aluminium. Durant le fonctionnement de la batterie, les ions lithium sont desintercalés par oxydation du matériau d'anode et, simultanément, le matériau de cathode se réduit par un procédé d'intercalation des ions lithium dans sa structure. Par la suite, il est possible de charger la batterie par l'application d'un courant externe. Le circuit extérieur engendre un flux d'électron qui va de la cathode (qui est à l'état réduit) vers l'anode. Ceci entraine l'oxydation et par conséquent la délithiation du matériau de cathode, et restore le stockage de lithium à l'anode. De cette manière, il est possible de charger et décharger la batterie pour un millier de cycles.

Une cellule solaire à colorant photosensible (DSSC) peut être sommairement décrite comme suit : le système nécessite au moins que l'une de ses faces contienne un collecteur de courant transparent à la lumière (Schéma 2, flèche 1') qui peut être une grille métallique ou une couche métallique très mince, un polymère conducteur ou un substrat transparent (verre ou polymère) revêtu par une couche de matériau transparent et conducteur à l'instar d'un oxyde (comme par exemple FTO, ITO, ZnO dopé Al, Ga et/ou Si, etc.), un polymère conducteur (comme par exemple le PEDOT:PSS, etc.) ou de grilles métalliques.

La couche photosensible dans une DSSC (Schéma 2, flèche 2') est composée d'une couche de matériau semi-conducteur (comme par exemple TiO₂, ZnO, SnO₂, « core-shell », etc.). La couche doit être la plus transparente possible et être en mesure de permettre l'adsorption du colorant photosensible. Le colorant photosensible est généralement composé de molécules organométalliques à l'instar des colorants composés de groupements pyridyl et de ruthénium (comme par exemple les colorants industriels connus sous le nom « N3 », « black dye », « SJW-E1 », « N719 », etc.). Le colorant photosensible peut également être un composé entièrement organique (comme par exemple le « TA-St-CA », etc.).

L'électrolyte dans une cellule DSSC (Schéma 2, flèche 3') peut être un liquide, un gel ou un solide, mais il doit, dans tous les cas, contenir un couple redox sacrificiel. Généralement, le couple redox sacrificiel est le couple I₃⁻/I⁻, mais d'autres couples redox peuvent également être utilisés (comme par exemple Br₃⁻/Br, SeCN⁻/(SeCN)₂, (SCN)₂/SCN⁻, Co³⁺/Co²⁺, etc.). Un catalyseur (comme par exemple du platine, de l'or, etc.) est généralement utilisé (Schéma 2, flèche 4') afin d'augmenter la vitesse de recombinaison du couple sacrificiel.

Enfin, une cellule DSSC comprend un collecteur de courant (Schéma 2, flèche 5'). Le collecteur de courant peut être transparent comme par exemple celui illustré au Schéma 2, flèche 1', ou non transparent.

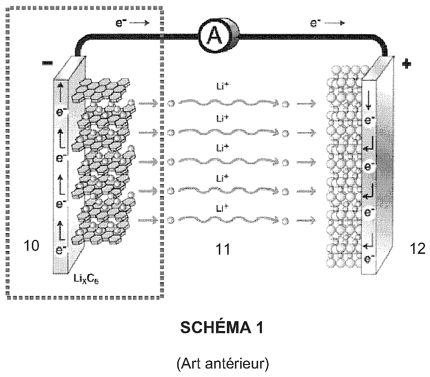

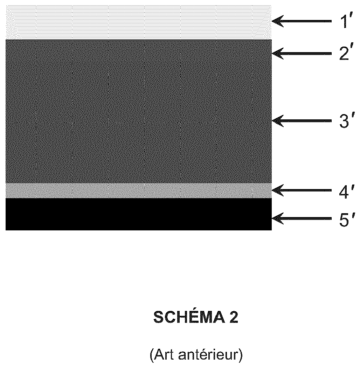

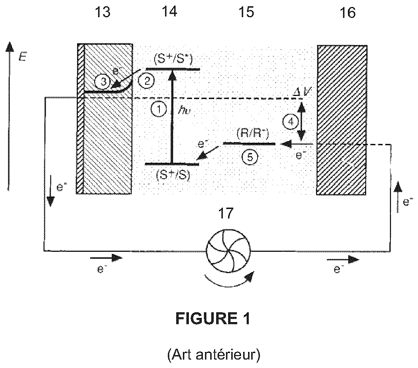

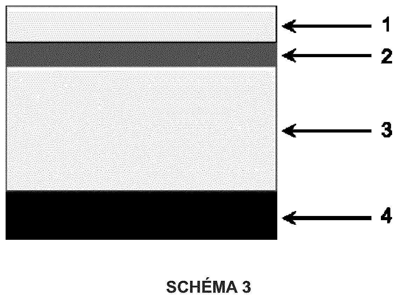

La Figure 1 décrit succinctement le fonctionnement d'une cellule DSSC - la référence numérique 13 indique un semi-conduteur, la référence numérique 14 indique un colorant, la référence numérique 15 indique l'électrolyte, la référence numérique 16 indique une contre-électrode à base de verre conducteur et la référence numérique le circuit externe.

Dans une cellule DSSC, le flux d'électron est créé par l'excitation du colorant photosensible par la lumière, et par le fait que l'Orbitale Moléculaire Vacante la Plus Basse (LUMO, « lowest unoccupied molecular orbital ») du colorant soit plus énergétique que la bande de conduction du semi-conducteur. Par conséquent, des électrons peuvent quitter le colorant excité (S*) en étant captés par le semi-conducteur et par la suite par le collecteur de courant. De cette manière, le colorant est oxydé en S⁺ et réagit immédiatement avec le couple redox sacrificiel R/R⁻ selon la réaction S⁺ + R⁻ → S + R. Enfin, l'électron arrivant via le circuit extérieur à la contre électrode sert à la recombinaison du couple redox sacrificiel. Vu que l'ensemble de ces réactions est gouverné par la cinétique, il faut que l'extraction de l'électron du colorant excité via le semi-conducteur puis le collecteur de courant soit plus rapide que la relaxation naturelle du colorant, afin d'obtenir ce mécanisme.

D'intenses travaux de recherche sont actuellement effectués, dans le but d'améliorer la qualité des batteries. Une grande partie de ces travaux se concentre sur les électrodes.

### RÉSUMÉ DE L'INVENTION

Les inventeurs ont conçu et développé une électrode qui, lorsqu'elle est utilisée dans une batterie, permet de recharger ladite batterie à l'aide de la lumière. Selon la revendication 1 une électrode cathode comprenant un matériau d'électrode et un colorant photosensible, dans laquelle le matériau de cathode est LiFePO₄, LiCoO₂, FeS₂ ou V₂O₅. Selon la revendication 2 une électrode anode comprenant un matériau d'électrode et un colorant photosensible, dans laquelle le matériau d'anode est Li₄Ti₅O₁₂. Selon un mode de réalisation de l'invention, l'électrode peut comprendre en outre un matériau semi-conducteur. Une batterie comprenant l'électrode selon l'invention peut être chargée à l'aide de la lumière.

D'autres avantages pourront encore apparaître à la personne versée dans l'art à la lecture des exemples ci-dessous illustrés par les figures annexées, donnés à titre illustratif et non limitatif.

### BRÈVE DESCRIPTION DES FIGURES

Dans les illustrations annexées :
Le Schéma 1 décrit succinctement le fonctionnement d'une batterie Li-ion.
Le Schéma 2 illustre succinctement une cellule DSSC.
La Figure 1 décrit succinctement le fonctionnement d'une cellule DSSC.
Le Schéma 3 illustre un assemblage selon l'invention.
La Figure 2 est une micrographie MEB de la poudre d'oxyde de titane pré-calcinée à 400°C (Exemple 1).
La Figure 3 est une micrographie MEB de la surface de l'électrode photoactive (Exemple 1).
La Figure 4 est un diffractogramme DRX d'une électrode brute d'assemblage de l'Exemple 1.
La Figure 5 est un cycle de voltamétrie cyclique (CV, « cyclic voltametry ») d'une électrode selon l'Exemple 1, mesuré par voltamétrie cyclique à 0,1 mV/s, de capacité de 116 µA.h pour une surface de 2,7 cm².
La Figure 6 est une évolution de la tension à circuit ouvert (OCV, « open circuit voltage ») de la photobatterie sous illumination selon l'invention (Exemple 1).
La Figure 7 est un diffractogramme DRX d'une électrode selon l'Exemple 1 après OCV.
La Figure 8 est une micrographie en MEB-HR de la surface du film déposé sur du FTO après un recuit de 1h à 400°C sous un flux d'azote (Exemple 2).
La Figure 9 illustre les caractérisations électrochimiques réalisées en cellule à trois-électrodes de l'électrode photoactive selon l'Exemple 2 dans un électrolyte contenant 0,3M de LiTFSI dans une solution d'EC-DEC (30-70% masse) vs. Li, et avec une référence de Li⁺/Li : la partie A de la figure est une évolution de l'OCV sous illumination; et la partie B est la CV du film, le potentiel est réalisé avec une vitesse de balayage de 0,1 mV/s donnant une capacité de 74 µA.h/cm² (Exemple 2).
La Figure 10 est une micrographie MEB illustrant les cristaux de LiFePO₄ obtenus par voie hydrothermale (Exemple 3).

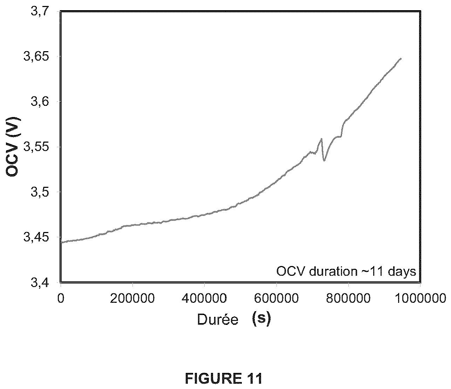

La Figure 11 illustre l'évolution de l'OCV du film monté dans une cellule à trois-électrodes en utilisant un électrolyte de 1M LiPF₆ dissout EC-DEC (30-70% masse) vs. Li, et avec une référence de Li⁺/Li sous illumination, durée totale ∼11 jours (Exemple 3).
La Figure 12 illustre la mesure de l'évolution de l'OCV d'un film constitué de particules submicroniques de LFP (« lithium ferrophosphate » ou « lithium iron phosphate » (LiFePO₄)) et de colorant N719 sous illumination et réalisé en cellule à trois électrodes dans du LiPF₆ (1M) dissout dans de l'EC-DEC (30-70% masse) vs. Li, et en utilisant Li⁺/Li en référence (Exemple 4).
La Figure 13 est un diffractogramme des rayons X réalisé en angle incident rasants de l'Exemple 4 avant OCV.
La Figure 14 est une micrographie HRTEM de l'Exemple 4 avant l'OCV. L'inclusion est la transformation de Fourrier de cette image prouvant la présence initiale de LiFePO₄ (appelé LFP) en structure tryphilite.
La Figure 15 est un diffractogramme des rayons X réalisé en angle incident rasants de l'Exemple 4 après OCV.
La Figure 16 est une micrographie HRTEM de l'exemple 4 après l'OCV. L'inclusion est la transformation de Fourrier de cette image prouvant la formation de FePO₄ (appelé FP) de structure heterosite après illumination.
La Figure 17 est un spectre XPS de l'Exemple 5 avant (partie A de la figure) et après OCV (partie B de la figure).
La Figure 18 est une mesure de l'évolution de l'OCV d'un film constitué de particules submicroniques de LFP et de colorant N719 conservé dans l'obscurité et réalisé en cellule à trois électrodes dans du LiPF₆ (1M) dissout dans de l'EC-DEC (30-70% masse) vs. Li, et en utilisant Li⁺/Li en référence (Exemple 5).
La Figure 19 est une mesure de l'évolution de l'OCV d'un film constitué de TiO₂-LFP et de colorant N719 conservé dans l'obscurité et réalisé en cellule à trois électrodes dans du LiPF₆ (1M) dissout dans de l'EC-DEC (30-70% masse) vs. Li, et en utilisant Li⁺/Li en référence (Exemple 6).

### DESCRIPTION DE MODES DE RÉALISATIONS DE L'INVENTION

Telle qu'utilisée dans la présente demande, l'expression « matériau d'électrode du même type que les matériaux d'électrode utilisés dans les batteries Li-ion » réfère aux matériaux qui présentent des caractéristiques et des propriétés similaires à celles des matériaux d'anode ou de cathode de batteries Li-ion (i.e., un matériau qui se comporte comme un matériau d'anode ou de cathode dans une batterie Li-ion). Ainsi, plus spécifiquement, il est fait référence dans la demande à un « matériau de cathode du même type que les matériaux de cathode utilisés dans les batteries Li-ion » ou à un « matériau d'anode du même type que les matériaux d'anode utilisés dans les batteries Li-ion ».

Telle qu'utilisée dans la présente demande, l'expression « colorant sensible à la lumière du même type que les colorants utilisés dans les cellules solaires à colorant photosensible » ou l'expression « colorant photosensible » réfère aux colorants qui présentent des caractéristiques et des propriétés similaires à celles des colorants dans les photobatteries (i.e., un colorant qui se comporte comme un colorant dans une photobatterie). Plus spécifiquement, l'une ou l'autre de ces expressions réfère à un matériau dont la molécule peut absorber des photons. De ce fait, au moins un électron de la molécule passe de son Orbitale Moléculaire Occupée la Plus Haute (HOMO, « highest ocupied molecular energy ») vers son Orbitale Moléculaire Vacante la Plus Basse (LUMO, « Lowest Unoccupied Molecular Orbital »).

Telle qu'utilisée dans la présente demande, l'expression « matériau semi-conducteur » désigne un matériau qui présente une largeur de bande interdite ne dépassant pas environ 4eV.

Les inventeurs ont conçu et développé une électrode qui, lorsqu'elle est montée dans une batterie, permet le chargement de la batterie à l'aide de la lumière. Selon un mode de réalisation de l'invention, l'électrode comprend une combinaison d'un matériau d'électrode du même type que les matériaux utilisés dans les batteries Li-ion et d'un colorant sensible à la lumière du même type que les colorants utilisés dans les cellules solaires à colorant photosensible (DSSC). L'électrode peut, en outre, comprendre un matériau semi-conducteur. L'électrode selon l'invention permet le chargement de la batterie à l'aide de la lumière, à la place d'un courant extérieur appliqué.

Selon un mode de réalisation de l'invention, l'électrode cathode est obtenue en combinant un matériau de cathode du même type que les matériaux de cathode utilisés dans les batteries Li-ion et un colorant sensible à la lumière du même type que les colorants utilisés dans les cellules solaires à colorant photosensible. Selon un mode de réalisation préféré, la combinaison peut comprendre un matériau semi-conducteur.

Le matériau de cathode du même type que les matériaux de cathode utilisés dans les batteries Li-ion peut être un matériau de type olivine. Selon un mode de réalisation de l'invention, le matériau de cathode peut être LiFePO₄, IiCoO₂, FeS₂ ou V₂O₅. Selon un mode de réalisation préféré de l'invention, le matériau de cathode est le LiFePO₄. Le matériau de cathode selon l'invention peut être revêtu de carbone.

Selon un autre mode de réalisation de l'invention, l'électrode anode est obtenue en combinant un matériau d'anode du même type que les matériaux d'anode utilisés dans les batteries Li-ion et un colorant sensible à la lumière du même type que les colorants utilisés dans les cellules solaires à colorant photosensible. Selon un mode de réalisation préféré, la combinaison peut comprendre un matériau semi-conducteur.

Le matériau d'anode du même type que les matériaux d'anode utilisés dans les batteries Li-ion peut être du lithium métallique, du graphite, du silicium, ou un oxyde métallique comme par exemple Fe₂O₃, TiO₂, Li₄Ti₅O₁₂, etc. Selon un mode de réalisation préféré de l'invention, le matériau d'anode peut être du lithium métallique ou du graphite. Le matériau d'anode selon l'invention peut être revêtu de carbone.

Le colorant sensible à la lumière du même type que les colorants utilisés dans les cellules solaires à colorant photosensible (DSSC) peut être N3, « black dye », SJW-E1 ou N719. Selon un mode de réalisation préféré de l'invention, le colorant sensible à la lumière est N719.

Le matériau semi-conducteur peut être TiO₂, ZnO, SnO₂ ou « core-shell ». Selon un mode de réalisation préféré de l'invention, le matériau semi-conducteur est TiO₂.

Les trois composantes de l'électrode cathode selon l'invention, à savoir, matériau de cathode du même type que les matériaux de cathode utilisés dans les batteries Li-ion, colorant sensible à la lumière du même type que les colorants utilisés dans les cellules DSSC et matériau semi-conducteur, forment des contacts intimes les uns avec les autres. Selon un mode de réalisation de l'invention, le matériau de cathode et le matériau semi-conducteur peuvent tout d'abord être mélangés, et le colorant ajouté par la suite.

Le matériau de cathode est utilisé sous forme de particules submicroniques ou des particules obtenues par voie hydrothermale. La taille des particules peut être inférieure à 1 micron. Selon un mode de réalisation préféré de l'invention, la taille des particules est inférieure à 0,1 microns.

Le matériau semi-conducteur est utilisé sous forme de poudre nanométrique. La taille des particules peut être inférieure à 100 nanomètres. Selon un mode de réalisation préféré de l'invention, la taille des particules est inférieure à 30 nanomètres. Le matériau semi-conducteur peut être sous forme de poudre pré-calcinée.

Le colorant utilisé peut être sous forme liquide, et selon un mode de réalisation, l'ajout du colorant peut être effectué par immersion dans le liquide d'un film formé par le mélange matériau de cathode et matériau semi-conducteur. Selon un mode de réalisation de l'invention, le film comprend un matériau de cathode mais pas de matériau semi-conducteur.

Le mélange matériau de cathode et matériau semi-conducteur peut en outre comprendre d'autres agents, qui peuvent être des solvants (comme par exemple l'eau, la N-méthyl-2-pyrrolidine (comme par exemple NMP, etc.), des liants (comme par exemple PEG, etc.), des dispersants (comme par exemple Triton-X100, etc.).

Le matériau d'électrode (Schéma 3, flèche 2) est déposé sur un substrat transparent et conducteur (Schéma 3, flèche 1) qui est à la fois transparent à la lumière et qui est un conducteur électronique permettant aux électrons de circuler du ou vers un circuit externe. L'électrolyte (Schéma 3, flèche 3) selon ce mode de réalisation, est lithié à l'instar de ceux utilisés dans les batteries Li-ion et ne contient pas de couple redox sacrificiel. L'anode (Schéma 3, flèche 4) est du même type que les anodes utilisées dans les batteries Li-ion.

Lors de l'exposition à la lumière, comme dans le cas des DSSC, le colorant photosensible est excité et peut être finalement oxydé, puisque au moins un électron de cette molécule est promu à son orbitale moléculaire vacante la plus basse (LUMO) qui est plus énergétique que la bande de conduction du semi-conducteur. Dès lors, le semi-conducteur envoie les électrons vers le circuit extérieur via le collecteur de courant. Le matériau de cathode de la batterie (appelée BCM, « battery cathode material ») préalablement réduit sert de « couple redox sacrificiel » à l'instar des couples redox sacrificiels utilisés dans les DSSC. L'oxydation du BCM réduit, Li(BCM), se fait selon la réaction suivante :

Li(BCM) + S⁺ → Li⁺ + (BCM) + S

Afin que la réaction évolue spontanément, il est nécessaire que le couple redox du colorant, S⁺/S ait un potentiel standard plus grand que celui du couple redox sacrificiel, Li⁺/Li(BCM). Dans le cas des cellules solaires à colorant, le couple redox le plus fréquemment utilisé est le couple I₃⁻/I⁻ qui a un potentiel standard de 0,53V vs. ESH, ce qui correspond à 3,57V vs. Li⁺/Li. Par conséquence, tout le matériau de cathode utilisé dans une batterie ayant un potentiel standard inférieur à 3,6V vs. Li⁺/Li peut être oxydé lorsque le matériau est combiné à un colorant photosensible du même type que les colorants utilisés pour les DSSC. Dans ce cas, le matériau de cathode de la batterie qui est à l'état réduit, Li(BCM), peut s'oxyder en BCM et ainsi substituer le couple redox sacrificiel I⁻/I₃⁻ des DSSC. Dans le cas où l'on utilise un matériau de cathode dans une batterie ayant un potentiel standard plus élevé que 3,6V vs. Li⁺/Li, la synthèse et/ou l'utilisation de colorants spécifiques, à l'instar des DSSC utilisant le couple Co³⁺/Co²⁺, peut être envisagée.

Les ions lithium libérés par la réaction à la cathode sont réduits du côté de l'anode à l'aide de l'électron en provenance du circuit extérieur. De ce fait, il est possible d'obtenir l'oxydation du matériau de cathode réduit sans l'application d'un courant extérieur.

### Exemple 1

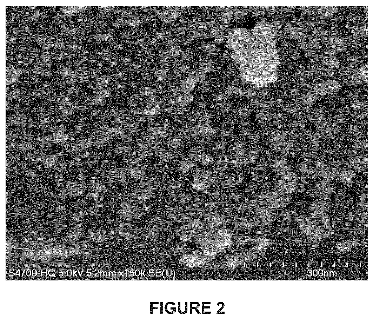

Composition de la pâte de la cathode :
- Poudre nanométrique de TiO₂ pré-calcinée à 400°C/1h (Figure 2) : 0,3g
- Particules submicroniques de LiFePO₄ : 0,3g
- PVDF : 0,06g
- NMP : 3mL

Un film humide de cette pâte de 76,2 micromètres (3mils) a été déposé sur un substrat de verre/FTO (Cytodiagnostics TEC 7, 6-8Ω) par la méthode dite du « Doctor Blade ». Le film a été recuit sous un flux d'azote selon la procédure suivante : une rampe en température jusqu'à 400°C en 1h, un palier de 1h à 400°C, suivi d'un refroidissement naturel jusqu'à la température ambiante.

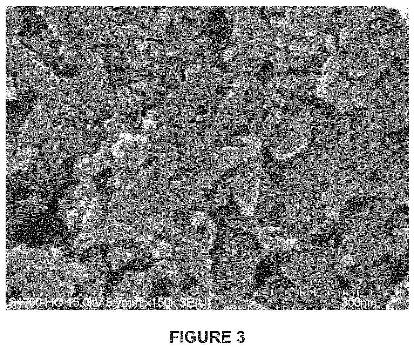

Le film ainsi obtenu a été plongé durant 24h dans une solution aqueuse contenant 4 x 10⁻⁴M de colorant photosensible N719 afin d'ancrer ledit colorant à la surface des particules constituant la cathode. Les échantillons ont été séchés à 50°C sous vide durant 48h (Figure 3).

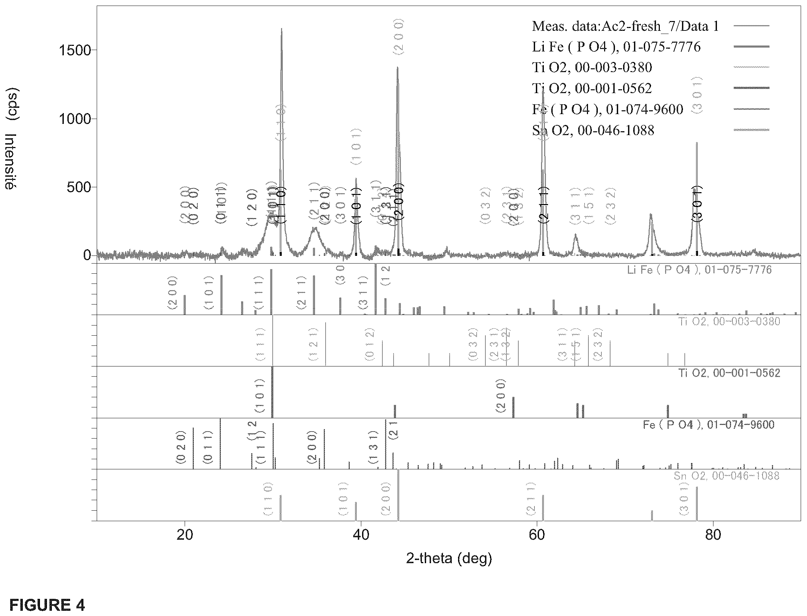

Le diffractogramme DRX de l'électrode photoactive brute d'assemblage (Figure 4) montre la présence de l'oxyde d'étain issu du substrat revêtu par du FTO, les phases anatase et brookite qui proviennent de l'oxyde de titane et la phase tryphilite provenant du LiFePO₄. La présence initiale de la phase heterosite FePO₄ est exclue du fait de la non correspondance en intensité des pics.

L'électrode photoactive a été montée en configuration à trois électrodes dans une solution 1M de LiPF₆ dissout dans du EC-DEC-VC en tant qu'électrolyte vs. Li et en utilisant une référence de Li⁺/Li.

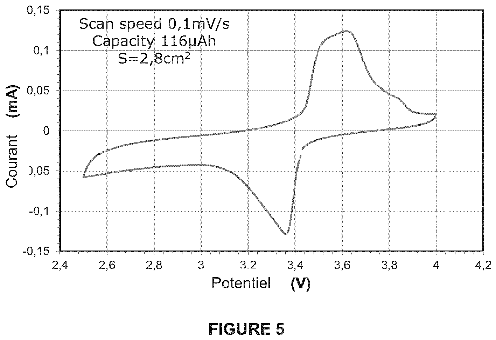

Les propriétés électrochimiques de ces électrodes ont été mesurées par voltamétrie cyclique (CV, « cyclic voltametry ») avec une vitesse de balayage de 0,1mV/s et une plage de tension allant de 2,5V à 4V par rapport au lithium (Figure 5). La CV s'est terminée à un potentiel de 2,5V. La CV ainsi obtenue est représentative d'un film composé de cristaux de LFP submicroniques, du fait de son potentiel d'oxydation situé à 3,46V et son potentiel de réduction à 3,4V.

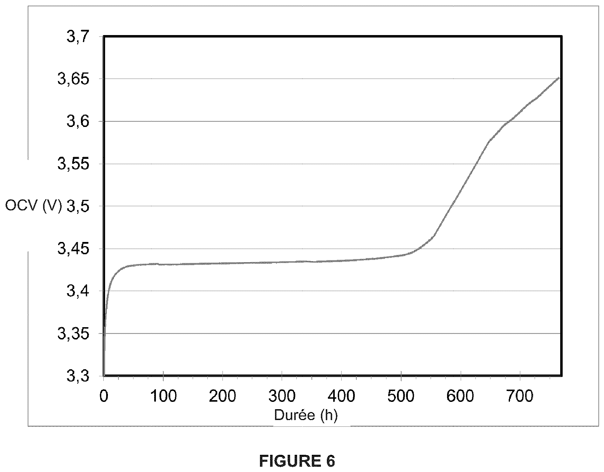

Dès que la voltamétrie cyclique s'est terminée à un potentiel de 2,5V, la tension à circuit ouvert (OCV, « open circuit voltage ») de l'échantillon conservé dans la cellule à trois électrodes et sous la lumière de la hotte a été enregistrée (Figure 6). Une augmentation rapide et attendue de l'OCV de 2,5V à 3,4V a été obtenue en moins d'une heure. Par la suite, l'OCV a formé un plateau stable durant 24 jours à un potentiel compris entre 3,42 et 3,44V. Ce plateau a permis de charger la batterie. À la fin de l'OCV, la tension de la batterie augmente de 3,44V à 3,65V. Cette augmentation est due à la charge de la batterie ou de la photobatterie comme attendu.

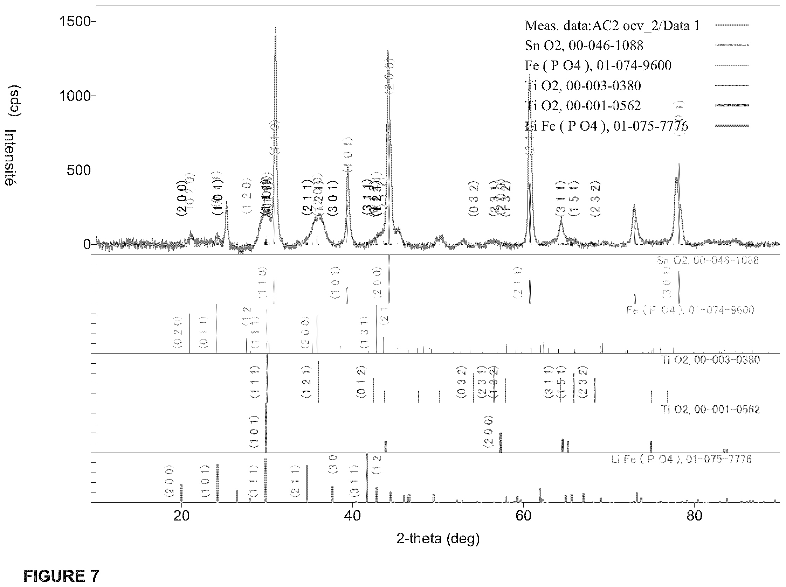

Après la fin de l'OCV, l'échantillon a été de nouveau analysé par DRX (Figure 7). Les pics principaux correspondent à ceux des phases casserite (oxyde d'étain), brookite et anatase vues à la Figure 4. Cependant, quelques modifications des pics apparaissent dans la région des faibles angles (2θ < 30°). Ces modifications sont probablement dues au fait qu'une partie du lithium fer phosphate s'est oxydée en fer phosphate. Du fait de la résolution du diffractogramme, il nous est impossible de savoir si l'intégralité de la phase triphilite LiFePO₄ s'est oxydée en heterosite FePO₄, mais la majeure partie a été convertie.

Nous avons estimé le rapport massique Fe/Ti sur différentes parties du film. Dans tous les cas, ce rapport était compris entre 1,49 et 2,02; or pour un mélange homogène comprenant 50% masse - 50% masse de LiFePO₄-TiO₂, ce rapport devrait être de 0,59. Cette différence est probablement due au fait que les particules de TiO₂ se sont mal dispersées dans le NMP (une partie de l'oxyde de titane restait au fond du pot). Ce manque d'oxyde de titane peut avoir un impact direct sur les performances de la photobatterie. Par conséquent, le NMP peut être substitué par d'autres solvants, comme l'eau par exemple.

### Exemple 2

Composition de la pâte de la cathode :
- Poudre nanométrique de TiO₂ pré-calcinée à 400°C/1h : 0,4g
- Particules submicroniques de LiFePO₄ : 0,3g
- PEG servant de liant : 0,1g
- Eau : 2mL

Un film humide de cette pâte de 76,2 micromètres (3mils) a été déposé sur un substrat de verre/FTO (Cytodiagnostics TEC 7, 6-8Ω) par la méthode dite du « Doctor Blade ». Le film a été recuit sous un flux d'azote selon la procédure suivante : une rampe en température jusqu'à 400°C en 1h, un palier de 1h à 400°C, suivi d'un refroidissement naturel jusqu'à la température ambiante.

Le film ainsi obtenu a été plongé durant 24h dans une solution aqueuse contenant 4 x 10⁻⁴M de colorant photosensible N719, afin d'ancrer ledit colorant à la surface des particules constituant la cathode. Les échantillons ont été séchés à 50°C sous vide durant 24h.

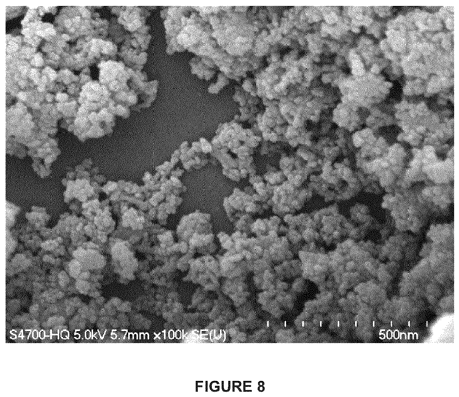

Des analyses HRSEM et EDS ont été réalisées afin de vérifier la morphologie des particules et le rapport massique Fe/Ti. Cet échantillon ne contient aucun agglomérat ayant une forme d'aiguilles, contrairement à l'Exemple 1 (Figure 8). Par EDS, un rapport massique de Fe/Ti d'environ 0,28 a été mesuré ; or, le rapport massique attendu pour cette pâte était de 0,44, ce qui signifie que le film est appauvri en LiFePO₄. Les agglomérats de particules en forme d'aiguilles de l'Exemple 1 sont probablement dus à l'agrégation des particules nanométriques de LiFePO₄.

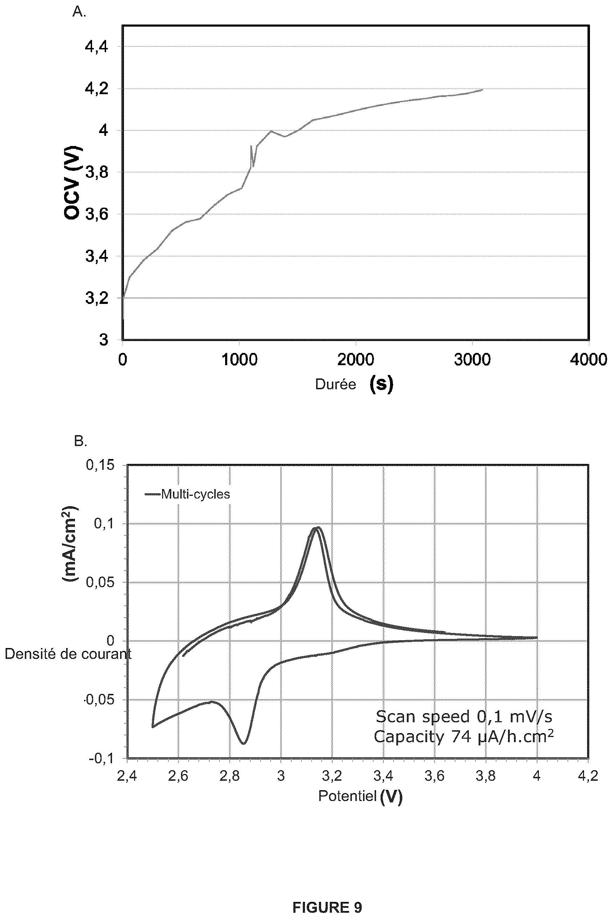

Le processus de photo-oxydation a été suivi par une OCV (Figure 9) mesurée sous illumination. Dans ce cas, la photo-oxydation est bien plus rapide que dans l'Exemple 1, puisque une tension de 4,2V a été mesurée en moins d'une heure. Cette amélioration est probablement due à un meilleur mélange entre le LiFePO₄ et le TiO₂. De plus, un test en voltamétrie cyclique du film montre que celui-ci se réduit à un potentiel compris entre 2,8-3,0V et s'oxyde pour un potentiel compris entre 3-3,2V, ce qui en accord avec la taille submicronique des cristaux.

### Exemple 3

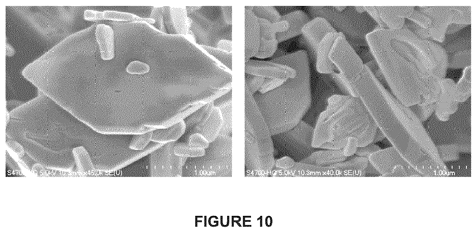

Composition de la pâte de la cathode :
- Poudre nanométrique de TiO₂ pré-calcinée à 400°C/1h : 5 g
- Particules de LiFePO₄ obtenues par voie hydrothermale (Figure 10) : 5 g
- Triton-X100 servant de dispersant : 0,3 mL
- Eau : 112 mL

Cette pâte a été déposée sur un substrat de verre/FTO (Cytodiagnostics TEC 7, 6-8Ω) par la méthode dite d'immersion retrait. Le film a été recuit sous un flux d'azote selon la procédure suivante : une rampe en température jusqu'à 400°C en 1h, un palier de 1h à 400°C, suivi d'un refroidissement naturel jusqu'à la température ambiante. Le film ainsi obtenu a été plongé durant 24h dans une solution aqueuse contenant 4 x 10⁻⁴M de colorant photosensible N719 afin d'ancrer ledit colorant à la surface des particules constituant la cathode. Les échantillons ont été séchés à 50°C sous vide durant 24h.

Ensuite, nous avons suivi l'OCV sous illumination du film : nous avons ainsi observé une augmentation du potentiel de 3,45V à 3,65V en 11 jours. Par comparaison avec l'Exemple 2, cette photo-oxydation est plus lente. Cela est probablement dû au fait que les particules de LiFePO₄ du film sont bien plus grandes que celles de l'Exemple 2.

### Exemple 4

Composition de la pâte de la cathode :
- Particules submicroniques de LiFePO₄ : 5g
- Triton-X100 servant de dispersant : 0,15 mL
- Eau : 50 mL

Cette pâte a été déposée sur un substrat de verre/FTO (Cytodiagnostics TEC 7, 6-8Ω) par la méthode dite d'immersion retrait. Le film a été recuit sous un flux d'azote selon la procédure suivante : une rampe en température jusqu'à 400°C en 1h, un palier de 1h à 400°C, suivi d'un refroidissement naturel jusqu'à la température ambiante. Le film ainsi obtenu a été plongé durant 24h dans une solution aqueuse contenant 4 x 10⁻⁴M de colorant photosensible N719 afin d'ancrer ledit colorant à la surface des particules. Ces échantillons ont été par la suite préalablement séchés à 50°C sous vide pendant 24h avant utilisation.

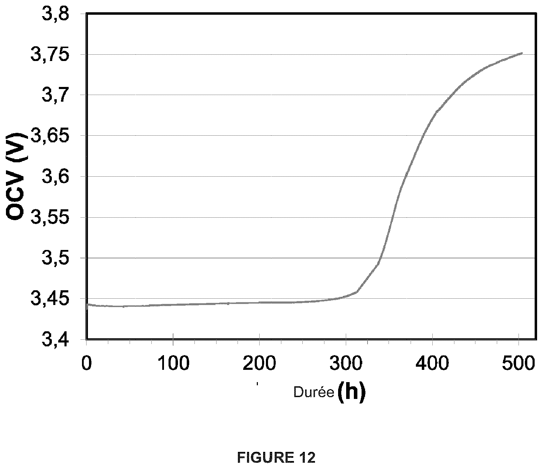

Nous avons ensuite mesuré l'évolution de l'OCV du film (Figure 12) : nous avons constaté une augmentation de cette dernière sous illumination de 3,4V jusqu'à 3,75V en 21 jours.

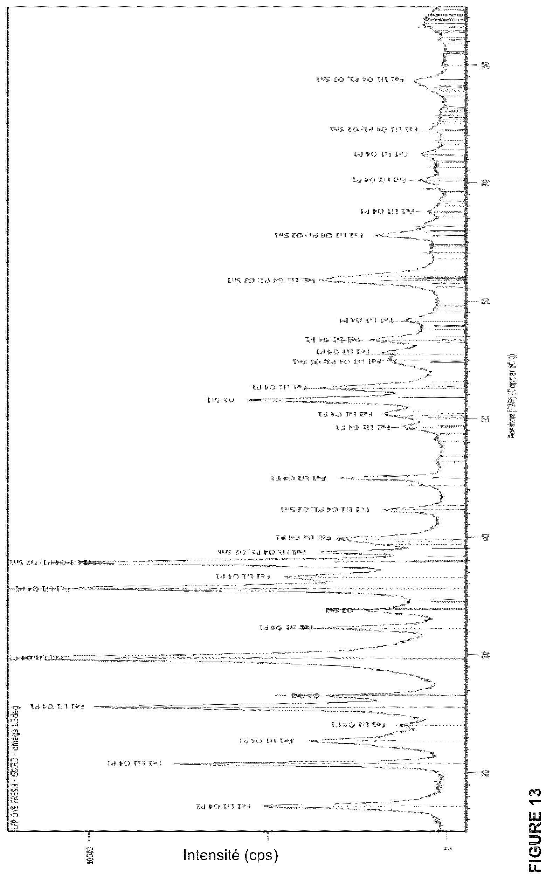

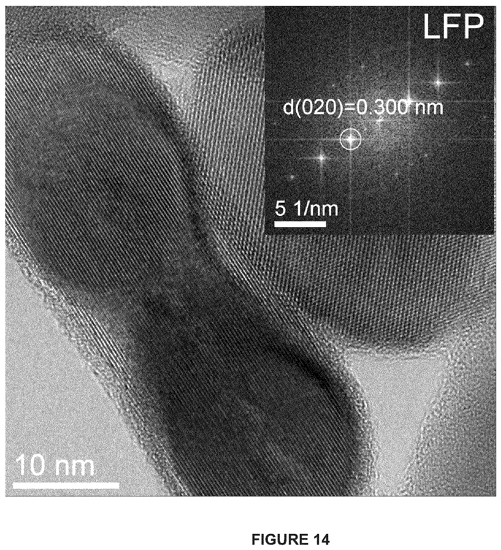

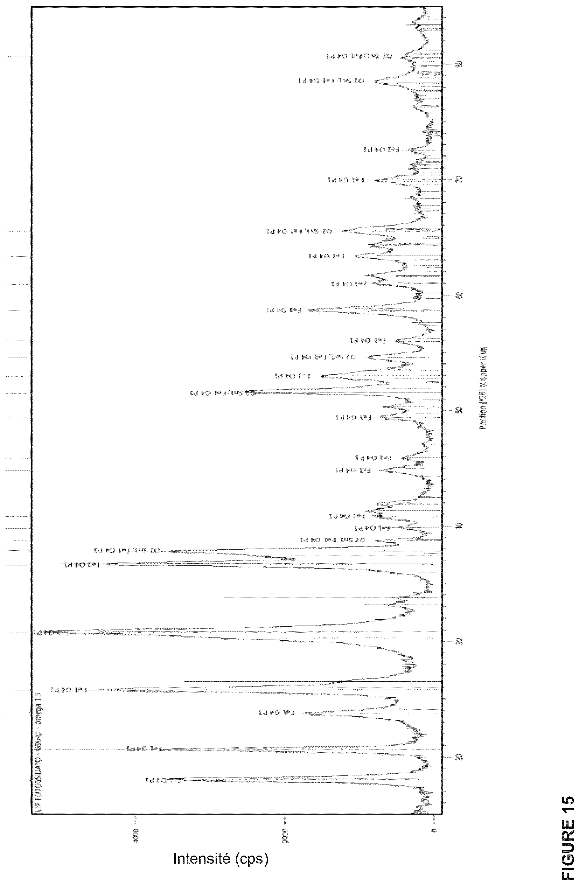

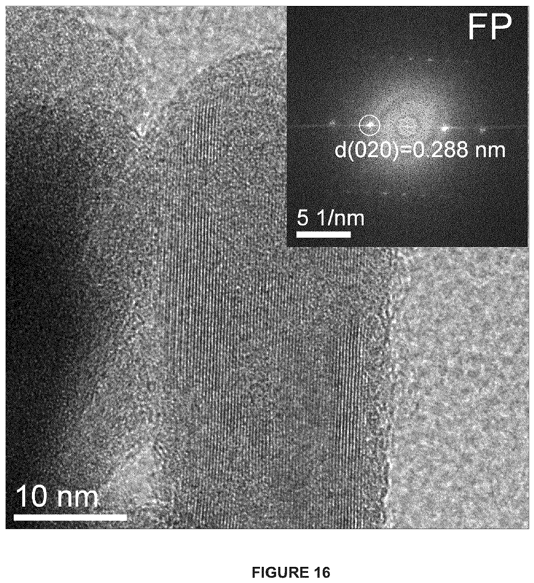

La Figure 13 et la Figure 14 sont, respectivement, un diffractogramme XRD et les micrographies en microscopie électronique à transmission à haute résolution (HRTEM) réalisés tous deux avant la photo-oxydation du film. Ces figures montrent que, avant la photo-oxydation du film, le matériau de batterie constituant l'électrode était constitué exclusivement des cristaux de LiFePO₄ de structure triphilite. La conversion du LiFePO₄ de structure triphilite en du FePO₄ de structure heterosite obtenue par photo-oxydation du film grâce au colorant photosensible et observable dans le diffractogramme XRD et les micrographies en microscopie électronique à transmission à haute résolution (HRTEM) réalisés après la photo-oxydation en Figure 15 et Figure 16, respectivement.

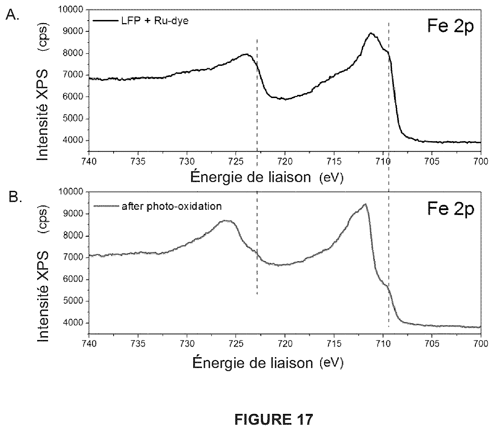

La Figure 17 représente les mesures XPS réalisées avant (A) et après (B) photo-oxydation. Une augmentation du pic des espèces Fe³⁺ est observée après photo-oxydation, ce qui est en accord avec la conversion de la phase triphilite LiFePO₄ en heterosite FePO₄. Cette transformation du Fe²⁺ issu du LiFePO₄ en Fe³⁺ du FePO₄ peut être suivie par la forte réduction des pics situés à -709 et -723 eV qui sont tous deux dus aux espèces Fe²⁺ et l'augmentation des pics situés à -712 et -723 eV qui sont quant à eux dus aux espèces Fe³⁺.

L'ensemble des méthodes de caractérisation collectées dans cet exemple prouvent que la photo-oxydation du LiFePO₄ en FePO₄ est possible sans l'ajout d'un semi-conducteur à l'instar du TiO₂. Cependant, il apparait que l'utilisation d'un semi-conducteur permet d'améliorer la rapidité de la photo-oxydation.

### Exemple 5

Composition de la pâte de la cathode :
- Particules submicroniques de LiFePO₄ : 5g
- Triton-X100 servant de dispersant : 0,15 mL
- Eau : 50 mL

Cette pâte a été déposée sur un substrat de verre/FTO (Cytodiagnostics TEC 7, 6-8Ω) par la méthode dite d'immersion retrait. Le film a été recuit sous un flux d'azote selon la procédure suivante : une rampe en température jusqu'à 400°C en 1h, un palier de 1h à 400°C, suivi d'un refroidissement naturel jusqu'à la température ambiante. Le film ainsi obtenu a été plongé durant 24h dans une solution aqueuse contenant 4 x 10⁻⁴M de colorant photosensible N719 afin d'ancrer ledit colorant à la surface des particules. Ces échantillons ont été par la suite préalablement séchés à 50°C sous vide pendant 24h avant utilisation.

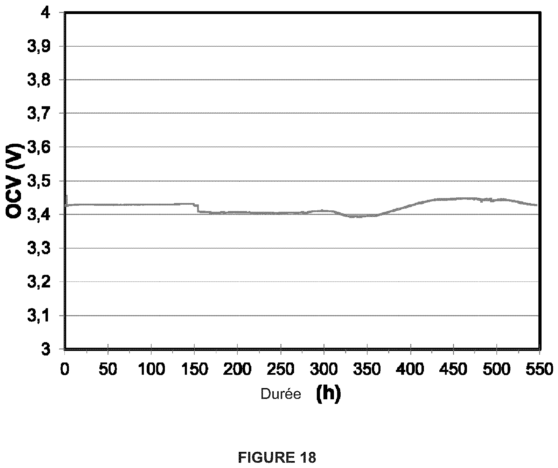

Le film a été conservé dans l'obscurité durant la mesure de l'OCV. Après 23 jours, le potentiel a atteint un plateau à 3,4V vs. Li⁺/Li (Figure 18) et que, contrairement à l'Exemple 4, aucune augmentation de potentiel n'est observée. Cet exemple démontre que le colorant photosensible est un élément nécessaire pour délithier le LiFePO₄, requiert de la lumière afin de permettre cette délithiation.

### Exemple 6

Composition de la pâte de la cathode :
- Poudre nanométrique de TiO₂ pré-calcinée à 400°C/1h : 5 g
- Particules submicroniques de LiFePO₄ : 5g
- Triton-X100 servant de dispersant : 0,3 mL
- Eau : 112 mL

Cette pâte a été déposée sur un substrat de verre/FTO (Cytodiagnostics TEC 7, 6-8Ω) par la méthode dite d'immersion retrait. Le film a été recuit sous un flux d'azote selon la procédure suivante : une rampe en température jusqu'à 400°C en 1h, un palier de 1h à 400°C, suivi d'un refroidissement naturel jusqu'à la température ambiante. Le film ainsi obtenu a été plongé durant 24h dans une solution aqueuse contenant 4 x 10⁻⁴M de colorant photosensible N719 afin d'ancrer ledit colorant à la surface des particules. Ces échantillons ont été par la suite préalablement séchés à 50°C sous vide pendant 24h avant utilisation.

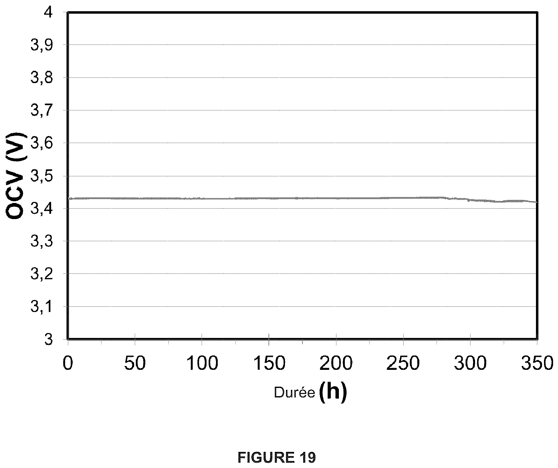

Le film a été conservé dans l'obscurité durant la mesure de l'OCV. Contrairement à l'Exemple 2 où le système a atteint un potentiel de 4,2V en moins de 1h, le potentiel a atteint le plateau de 3,4 V sans la moindre autre augmentation durant une période de 14 jours (Figure 19). Cet exemple montre que malgré la présence d'un semi-conducteur utilisé pour améliorer la réaction de délithiation du LiFePO₄, la présence de lumière est nécessaire pour obtenir cette réaction.

### RÉFÉRENCES

B. O'Reagan and M. Grätzel, Nature (1991) 353, 737-740.

## Revendications

1. Électrode cathode comprenant un matériau d'électrode et un colorant photosensible, dans laquelle le matériau de cathode est LiFePO₄, IiCoO₂, FeS₂ ou V₂O₅.

2. Électrode anode comprenant un matériau d'électrode et un colorant photosensible, dans laquelle le matériau d'anode est Li₄Ti₅O₁₂.

3. Électrode selon la revendication 1 ou 2, comprenant en outre un matériau semiconducteur.

4. Électrode selon la revendication 1 ou 3, dans laquelle le matériau de cathode est LiFePO₄.

5. Électrode selon l'une quelconque des revendications 1 à 4, dans laquelle le matériau d'électrode est revêtu de carbone.

6. Électrode selon l'une quelconque des revendications 1 à 5, dans laquelle le matériau d'électrode est constitué de particules dont la taille est inférieure 1 micromètre (micron); de préférence la taille des particules est inférieure à 0,1 micromètre (micron).

7. Électrode selon la revendication 3, dans laquelle le matériau semi-conducteur est TiO₂, ZnO, SnO₂, un « core-shell », ou une combinaison de ceux-ci; de préférence le matériau semi-conducteur est TiO₂.

8. Électrode selon la revendication 3, dans laquelle le matériau semi-conducteur est constitué de particules dont la taille est inférieure à 100 nanomètres; de préférence la taille des particules est inférieure à 30 nanomètres.

9. Électrode selon la revendication 3, dans laquelle le matériau semi-conducteur est pré-calciné.

10. Électrode selon l'une quelconque des revendications 1 à 4, dans laquelle le colorant photosensible est N3, « black dye», SJW-E1 , N719, un colorant photosensible organique comme par exemple le TA-St-CA, ou une combinaison de ceux-ci, de préférence le colorant photosensible est N719.

11. Électrode selon l'une quelconque des revendications 1 à 4, comprenant en outre un solvant, un dispersant, un liant, ou une combinaison de ceux-ci; de préférence le solvant est N-méthyl-2-pyrrolidine (NMP), eau, acétone, un alcool comme par exemple méthanol, propanol et butanol, diméthylformamide (DMF), diméthylsulfoxide (DMSO), ou une combinaison de ceux-ci; de préférence le solvant est l'eau; et/ou le dispersant est polyvinilidine difluoride (PVDF), un agent tensioactif qui ne réagit pas avec les matériaux de l'électrode comme par exemple Triton-X100, un sel d'ammonium alkyl bromure comme par exemple bromure de tétraéthylammonium, un halogénure d'alkylbenzyldiméthylammonium comme par exemple un bromure ou un chlorure d'alkylbenzyldiméthylammonium, un ester de glycol comme par exemple stéarate de glycol, un ester de glycérol, ou une combinaison de ceux-ci; de préférence le dispersant est Triton-X100; et/ou le liant est polyéthylène glycol (PEG), polyvinilidine difluorure (PVDF), polyvinilacétate (PVA), ou une combinaison de ceux-ci; de préférence le liant est polyéthylène glycol (PEG).

12. Batterie utilisant une électrode telle que définie selon l'une quelconque des l'revendications 1 à 11.

13. Utilisation d'une électrode telle que définie selon l'une quelconque des revendications 1 à 11, pour la production d'une batterie.

14. Méthode de fabrication d'une électrode, comprenant les étapes suivantes : (a) préparation d'un film comprenant un matériau d'électrode ; et (b) mise contact du film avec une solution comprenant un colorant photosensible; dans laquelle le matériau d'électrode est un matériau de cathode ou un matériau d'anode, dans laquelle le matériau de cathode est LiFePO₄, IiCoO₂, FeS₂ ou V₂O₅, et dans laquelle le matériau d'anode est Li₄Ti₅O₁₂.

15. Méthode selon la revendication 14, comprenant en outre l'étape préalable suivante : (a1) on mélange le matériau d'électrode avec un matériau semi-conducteur.

16. Méthode selon la revendication 14 ou 15, dans laquelle l'étape (a) comprend le pôt du matériau d'électrode sur un substrat solide; de préférence le substrat est un substrat de verre/FTO; de préférence le dépôt est effectué par la méthode qui utilise une lame de métal ou de plastique appelée racle ou lame du docteur, par la méthode dite d'immersion retrait, par une méthode de sérigraphies, par la méthode de revêtement par centrifugation, ou une combinaison de celles-ci; de préférence le dépôt est effectué par la méthode qui utilise une lame de métal ou de plastique appelée racle ou lame du docteur ou par la méthode dite d'immersion retrait.

17. Méthode selon la revendication 14 ou 15, dans laquelle l'étape (a) comprend le dépôt du mélange matériau d'électrode et matériau semi-conducteur sur un substrat; de préférence le substrat est un substrat de verre/FTO; de préférence le dépôt est effectué par la méthode qui utilise une lame de métal ou de plastique appelée racle ou lame du docteur, par la méthode dite d'immersion retrait, par une méthode de sérigraphies, par la méthode de revêtement par centrifugation, ou une combinaison de celles-ci; de préférence le dépôt est effectué par la méthode qui utilise une lame de métal ou de plastique appelée racle ou lame du docteur ou par la méthode dite d'immersion retrait.

18. Méthode selon la revendication 14 ou 15, dans laquelle l'étape (a) comprend l'utilisation d'un solvant; et la méthode comprend en outre, entre les étapes (a) et (b), une étape de séchage, suivie d'une étape de refroidissement;de préférence l'étape de séchage est conduite à une température d'environ 400°C et sous atmosphère inerte, de préférence sous atmosphère d'azote; et le refroidissement est effectué da façon naturelle jusqu'à la température ambiante.

19. Méthode selon la revendication 14 ou 15, dans laquelle l'étape (b) comprend l'immersion du film dans la solution comprenant un colorant photosensible.

20. Méthode selon la revendication 14 ou 15, comprenant en outre une étape de séchage après l'étape (b), suivie d'une étape de refroidissement.

21. Méthode selon la revendication 20, dans laquelle l'étape de séchage est conduite à une température comprise entre la température ambiante et 120°C et sous vide ou sous atmosphère inerte; et le refroidissement est effectué de façon naturelle jusqu'à la température ambiante.

## Patentansprüche

1. Kathodenelektrode, umfassend ein Elektrodenmaterial und einen lichtempfindlichen Farbstoff, wobei das Kathodenmaterial LiFePO₄, LiCoO₂, FeS₂ oder V₂O₅ ist.

2. Anodenelektrode, umfassend ein Elektrodenmaterial und einen lichtempfindlichen Farbstoff, wobei das Anodenmaterial Li₄Ti₅O₁₂ ist.

3. Elektrode nach Anspruch 1 oder 2, ferner umfassend ein Halbleitermaterial.

4. Elektrode nach Anspruch 1 oder 3, wobei das Kathodenmaterial LiFePO₄ ist.

5. Elektrode nach irgendeinem der Ansprüche 1 bis 4, wobei das Elektrodenmaterial mit Kohlenstoff beschichtet ist.

6. Elektrode nach irgendeinem der Ansprüche 1 bis 5, wobei das Elektrodenmaterial aus Teilchen mit einer Größe von weniger als 1 Mikrometer (Mikron) besteht; vorzugsweise beträgt die Teilchengröße weniger als 0,1 Mikrometer (Mikron).

7. Elektrode nach Anspruch 3, wobei das Halbleitermaterial Ti02, ZnO, Sn02, eine "Kern-Schale" oder eine Kombination davon ist; vorzugsweise ist das Halbleitermaterial TiO₂.

8. Elektrode nach Anspruch 3, wobei das Halbleitermaterial aus Teilchen mit einer Größe von weniger als 100 Nanometer besteht; vorzugsweise beträgt die Teilchengröße weniger als 30 Nanometer.

9. Elektrode nach Anspruch 3, wobei das Halbleitermaterial vorkalziniert ist.

10. Elektrode nach irgendeinem der Ansprüche 1 bis 4, wobei der lichtempfindliche Farbstoff N₃, "schwarzer Farbstoff' ("black dye"), SJW-E1, N719, ein organischer lichtempfindlicher Farbstoff wie beispielsweise TA-St-CA ist, oder eine Kombination davon ist, vorzugsweise ist der lichtempfindliche Farbstoff N719.

11. Elektrode nach irgendeinem der Ansprüche 1 bis 4, weiterhin umfassend ein Lösungsmittel, ein Dispergiermittel, ein Bindemittel, oder eine Kombination davon; vorzugsweise ist das Lösungsmittel N-Methyl-2-pyrrolidin (NMP), Wasser, Aceton, ein Alkohol wie beispielsweise Methanol, Propanol und Butanol, Dimethylformamid (DMF), Dimethylsulfoxid (DMSO), oder eine Kombination davon; vorzugsweise ist das Lösungsmittel Wasser; und/oder das Dispergiermittel ist Polyvinylidendifluorid (PVDF), ein Tensid, das nicht mit den Materialien der Elektrode reagiert, beispielsweise Triton-Xioo, ein Alkylbromidammoniumsalz wie beispielsweise Tetraethylammoniumbromid, ein Alkylbenzyldimethylammoniumhalogenid wie beispielsweise ein Bromid oder ein Chlorid von Alkylbenzyldimethylammonium, ein Glykolester wie beispielsweise Glykolstearat, ein Glycerinester, oder eine Kombination davon; vorzugsweise ist das Dispergiermittel Triton-Xioo; und/oder das Bindemittel ist Polyethylenglykol (PEG), Polyvinylidendifluorid (PVDF), Polyvinylacetat (PVA), oder eine Kombination davon; vorzugsweise ist das Bindemittel Polyethylenglykol (PEG).

12. Batterie unter Verwendung einer Elektrode wie gemäß irgendeinem der Ansprüche 1 bis 11 definiert.

13. Verwendung einer Elektrode, wie gemäß irgendeinem der Ansprüche 1 bis 11 definiert, zur Herstellung einer Batterie.

14. Verfahren zur Herstellung einer Elektrode, umfassend die folgenden Schritte: (a) Herstellen eines Films, umfassend ein Elektrodenmaterial; und (b) Inkontaktbringen des Films mit einer Lösung, die einen lichtempfindlichen Farbstoff enthält; wobei das Elektrodenmaterial ein Kathodenmaterial oder ein Anodenmaterial ist, wobei das Kathodenmaterial LiFePO₄, LiCoO₂, FeS₂ oder V₂O₅ ist, und wobei das Anodenmaterial Li₄Ti₅O₁₂ ist.

15. Verfahren nach Anspruch 14, ferner umfassend den folgenden vorherigen Schritt:
(a1) Mischen des Elektrodenmaterials mit einem Halbleitermaterial.

16. Verfahren nach Anspruch 14 oder 15, wobei Schritt (a) das Abscheiden des Elektrodenmaterials auf einem festen Substrat umfasst; vorzugsweise ist das Substrat ein Glas/FTO-Substrat; wobei vorzugsweise die Abscheidung durch ein Verfahren, bei dem eine Klinge oder Rakel aus Metall oder Kunststoff verwendet wird, oder das sogenannte "Doctor Blade"-Verfahren, durch das sogenannte Eintauch-Entnahme-Verfahren, durch ein Siebdruckverfahren, durch ein Beschichtungsverfahren durch Zentrifugation oder Spin-Coating-Verfahren, oder eine Kombination davon erfolgt; vorzugsweise erfolgt die Abscheidung durch ein Verfahren, bei dem eine Klinge oder Rakel aus Metall oder Kunststoff verwendet wird, oder durch das sogenannte "Doctor Blade"-Verfahren, oder durch das sogenannte Eintauch-Entnahme-Verfahren.

17. Verfahren nach Anspruch 14 oder 15, wobei Schritt (a) das Abscheiden einer Mischung des Elektrodenmaterials und Halbleitermaterials auf einem Substrat umfasst; vorzugsweise ist das Substrat ein Glas/FTO-Substrat; wobei vorzugsweise die Abscheidung durch ein Verfahren, bei dem eine Klinge oder Rakel aus Metall oder Kunststoff verwendet wird, oder das sogenannte "Doctor Blade"-Verfahren, durch das sogenannte Eintauch-Entnahme-Verfahren, durch ein Siebdruckverfahren, durch ein Beschichtungsverfahren durch Zentrifugation oder Spin-Coating-Verfahren, oder eine Kombination davon erfolgt; vorzugsweise erfolgt die Abscheidung durch ein Verfahren, bei dem eine Klinge oder Rakel aus Metall oder Kunststoff verwendet wird, oder durch das sogenannte "Doctor Blade"-Verfahren, oder durch das sogenannte Eintauch-Entnahme-Verfahren.

18. Verfahren nach Anspruch 14 oder 15, wobei Schritt (a) die Verwendung eines Lösungsmittels umfasst; und das Verfahren umfasst ferner zwischen den Schritten (a) und (b) einen Trocknungsschritt, gefolgt von einem Abkühlungsschritt; vorzugsweise wird der Trocknungsschritt bei einer Temperatur von etwa 400° C und unter einer inerten Atmosphäre, vorzugsweise unter einer Stickstoffatmosphäre, durchgeführt; und das Abkühlen erfolgt natürlich auf Raumtemperatur.

19. Verfahren nach Anspruch 14 oder 15, wobei Schritt (b) das Eintauchen des Films in die Lösung umfasst, die einen lichtempfindlichen Farbstoff umfasst.

20. Verfahren nach Anspruch 14 oder 15, ferner umfassend einen Trocknungsschritt nach Schritt (b), gefolgt von einem Abkühlungsschritt.

21. Verfahren nach Anspruch 20, wobei der Trocknungsschritt bei einer Temperatur zwischen Raumtemperatur und 120° C und unter Vakuum oder unter einer inerten Atmosphäre durchgeführt wird; und das Abkühlen auf natürliche Weise auf Raumtemperatur durchgeführt wird.

## Claims

1. An electrode cathode comprising an electrode material and a photosensitive dye, wherein the cathode material is LiFePO₄, LiCoO₂, FeS₂ or V₂O₅.

2. An electrode anode comprising an electrode material and a photosensitive dye, wherein the anode material is Li₄Ti₅O₁₂.

3. The electrode according to claim 1 or 2, further comprising a semi-conductor material.

4. The electrode according to claim 1 or 3, wherein the cathode material is LiFePO₄.

5. The electrode according to any one of claims 1 to 4, wherein the electrode material is coated with carbon.

6. The electrode according to any one of claims 1 to 5, wherein the electrode material consists of particles having a size below 1 micrometers (microns); preferably the size of the particles is below 0.1 micrometers (microns).

7. The electrode according to claim 3, wherein the semiconductor material is TiO₂, ZnO, SnO₂, a "core-shell", or a combination thereof; preferably the semiconductor material is TiO₂.

8. The electrode according to claim 3, wherein the semiconductor material consists of particles whose size is less than 100 nanometers; preferably the particle size is less than 30 nanometers.

9. The electrode according to claim 3, wherein the semiconductor material is pre-calcined.

10. The electrode according to any one of claims 1 to 4, wherein the photosensitive dye is N3, "black dye", SJW-E1, N719, an organic photosensitive dye such as for example TA-St-CA, or a combination thereof, preferably the photosensitive dye is N719.

11. The electrode according to any one of claims 1 to 4, further comprising a solvent, a dispersant, a binder, or a combination thereof; preferably the solvent is N-methyl-2-pyrrolidine (NMP), water, acetone, an alcohol such as for example methanol, propanol and butanol, dimethylformamide (DMF), dimethylsulfoxide (DMSO), or a combination thereof; preferably the solvent is water; and/or the dispersant is polyvinylidene difluoride (PVDF), a surfactant which does not react with the materials of the electrode, for example Triton-X100, an ammonium alkyl bromide salt such as, for example, bromide of tetraethylammonium, a halide of alkylbenzyldimethylammonium such as for example a bromide or a chloride of alkylbenzyldimethylammonium, a glycol ester such as for example glycol stearate, a glycerol ester, or a combination thereof; preferably the dispersant is Triton-X100; and/or the binder is polyethylene glycol (PEG), polyvinylidene difluoride (PVDF), polyvinylacetate (PVA), or a combination thereof; preferably the binder is polyethylene glycol (PEG).

12. A battery using an electrode as defined according to any one of claims 1 to 11.

13. Use of an electrode as defined according to any one of claims 1 to 11 for the production of a battery.

14. A method for manufacturing an electrode, comprising the following steps: (a) preparing a film comprising an electrode material; and (b) contacting the film with a solution comprising a photosensitive dye; wherein the electrode material is a cathode material or an anode material, wherein the cathode material is LiFePO₄, LiCoO₂, FeS₂ or V₂O₅, and wherein the anode material is Li₄Ti₅O₁₂.

15. The method according to claim 14, further comprising the following prior step: (a1) mixing the electrode material with a semiconductor material.

16. The method according to claim 14 or 15, wherein step (a) comprises depositing the electrode material on a solid substrate; preferably the substrate is a glass/FTO substrate; preferably the deposition is carried out by using a blade or knife of metal or plastics or the so-called "Doctor Blade" method, by the so-called immersion withdrawal method, by a screen printing method, by a method of coating by centrifugation or spin-coating, or a combination thereof; preferably the deposition is carried out by using a blade or knife of metal or plastics or the so-called "Doctor Blade" method or by the so-called immersion withdrawal method.

17. The method according to claim 14 or 15, wherein step (a) comprises depositing the mixture of electrode material and semiconductor material on a substrate; preferably the substrate is a glass/FTO substrate; preferably the deposition is carried out by using a blade or knife of metal or plastics or the so-called "Doctor Blade" method, by the so-called immersion withdrawal method, by a screen printing method, by a method of coating by centrifugation or spin-coating, or a combination thereof; preferably the deposition is carried out by using a blade or knife of metal or plastics or the so-called "Doctor Blade" method or by the so-called immersion withdrawal method.

18. The method according to claim 14 or 15, wherein step (a) comprises using a solvent; and the method further comprises, between steps (a) and (b), a drying step, followed by a cooling step; preferably wherein the drying step is carried out at a temperature of about 400° C and under an inert atmosphere, preferably under a nitrogen atmosphere; and cooling takes place naturally to room temperature.

19. The method according to claim 14 or 15, wherein step (b) comprises immersing the film in the solution comprising a photosensitive dye.

20. The method according to claim 14 or 15, further comprising a drying step after step (b), followed by a cooling step.

21. The method according to claim 20, wherein the drying step is carried out at a temperature between room temperature and 120° C and under vacuum or under an inert atmosphere; and the cooling is carried out naturally to room temperature.
